Europäisches Patentamt

European Patent Office

Office européen des brevets

(11) Publication number: **0 083 963**
**B1**

# EUROPEAN PATENT SPECIFICATION

(45) Date of publication of patent specification: 08.04.87

(51) Int. Cl.⁴: **C 09 D 5/02,** C 09 D 3/80, B 44 F 9/02, B 44 F 7/00

(21) Application number: 83300021.9

(22) Date of filing: 05.01.83

(54) Metal article having three-dimensional wood grain and stainable coating.

(30) Priority: 11.01.82 US 338770
11.01.82 US 338771

(43) Date of publication of application:
20.07.83 Bulletin 83/29

(45) Publication of the grant of the patent:
08.04.87 Bulletin 87/15

(84) Designated Contracting States:
DE FR GB IT NL

(56) References cited:
DE-A-2 507 884
DE-A-2 604 915

(73) Proprietor: UNITED STATES GYPSUM
COMPANY
101 South Wacker Drive
Chicago, Illinois 60606 (US)

(72) Inventor: Lat, Geronimo E.
8039 Crawford
Skokie Illinois 60076 (US)
Inventor: Martinelli, Lawrence R.
2406 Brandenberry Ct.
Arlington Heights Illinois 60004 (US)

(74) Representative: Rowe, Eric Nielsen et al
Edward Evans & Co. Chancery House
53-64 Chancery Lane
London WC2A 1SD (GB)

Courier Press, Leamington Spa, England.

## Description

This invention relates to a translucent, stain absorbent film which is applied as a coating of a filled acrylic latex to a substrate such as a metal or a plastic. More particularly, the invention relates to an aqueous, film-forming composition comprising an acrylic latex and a soft, water-insoluble extender pigment. Still more particularly, it relates to metal articles having an integral, three-dimensional, simulated wood grain in its surface and a stain-absorbent coating on its surface.

The translucent film of this invention is distinguished from a transparent one in that it is slightly opaque, permitting the imperfect transmission of light reflected from the substrate. The film is capable of absorbing an applied stain while still exposing the color and markings of the substrate.

Various techniques have been used over the years to simulate a wood grain on metal panels. Among these is the lamination on such a panel of a vinyl film having a wood grain pattern printed thereon. The film is subject to delamination and permanent disfigurement by tearing or scuffing actions. Another technique is the printing of the wood grain pattern directly on the metal. The printed pattern is very susceptible to scratching and scuffing. Restoration to the original sate is exceedingly difficult. A technique requiring artistic ability is the manual staining of a metal panel to give a streaked appearance resembling a wood grain.

Furthermore, as the patentees in U.S. Patent No. 3,811,915 observe, such simulated wood grains have the disadvantage of looking and feeling flat as compared to the three-dimensional look and feel of most natural woods. In said patent, there is taught a method for simulating a three-dimensional wood grain without the need for recourse to techniques such as mechanical embossing. The method taught comprises applying a conventional background-forming groundcoat to a substrate, printing a wood grain on the dried groundcoat with a graining ink containing a silicone fluid, and covering the printed groundcoat with a conventional top coat. The patentees teach that the groundcoat is normally pigmented to provide the desired contrast with the graining ink.

In the past, coatings intended as stainable base coats generally were pigmented so that an opaque film would be formed on the substrate. Groundcoats of this sort are used in the inventions described in U.S. Patent Nos. 1,651,136; 2,248,254 and 3,847,646. A method for producing a "crackled" antique finish is described in U.S. Patent No. 3,692,557. Said method utilizes a composition comprising an acrylic resin emulsion, finely ground marble, polyurethane, and water. The composition may be applied as both the first and third coatings on a substrate, the second coating being a water soluble dye, or, in the case where the substrate is non-absorbent, the water soluble dye is applied first and the acrylic/poly-urethane emulsion is applied over the dried dye. In either case, the water soluble dye is said to "bleed through" upwards into the third or uppermost coating to form the antique looking finish having a cracked surface.

In many instances, pigments which provide color and opacity to a groundcoat also have the effect of sealing the film so that a stain is not absorbed or, at best, it is absorbed unevenly.

According to the invention, therefore, there is provided an aqueous composition for forming a translucent, stain absorbent film, said composition comprising an acrylic latex, and a water-insoluble extender pigment having a mean particle size of from about 5 to about 7 µm.

Using the invention it has been discovered that a substantially colorless, translucent film capable of absorbing an applied stain may be formed on a substrate by coating the substrate with said aqueous composition.

The acrylic latices used in this invention are aqueous emulsions of acrylic resins; the emulsions have a solids content of from about 30% to about 45% by weight. The resins constitute substantially all of the solids present. Homopolymers and copolymers of alkyl acrylates and methacrylates and copolymers of such monomers with acrylonitrile, acrylic and methacrylic acids, styrene, and similar vinyl monomers are examples of the acrylic resins which are useful as the film forming constituents of the composition of this invention. The term "alkyl" is used herein to mean an alkyl group having from 1 to 8 carbon atoms. Acrylates and methacrylates in which the alkyl group contains from 1 to 3 carbon atoms are preferred. Copolymers of such esters with each other and/or with one or more of the monomers specifically mentioned above are particularly preferred. The films deposited by the acrylic latices useful in this invention are generally characterized by good resistance to water, high humidity, salt spray, oil and solvents.

There may be from about 10% to about 15% of the acrylic resin by weight in the composition. Water constitutes from about 10% to about 40% of the weight of the composition; this includes water in the acrylic latex and added water.

The size of the extender pigment particles is critical. Although a mean particle size of from about 5 to about 7 µm is generally acceptable, it is preferred that it be no greater than about 5 to about 6 µm. A maximum particle size of about 25 µm is also preferable. It is also important that the extender pigment be a soft material, i.e., one having a hardness on the MoH scale of about 4 or less. Materials such as calcium carbonate, zinc phosphate and barium sulfate are examples of the water-insoluble, soft extender pigments useful in this invention. Particularly useful are a zinc phosphate having an average particle size of about 6 µm and calcium carbonate having a mean particle size of about 5.5 µm.

The weight ratio of extender pigment to acrylic resin flanges from about 1.5:1 to about 3.6:1. A preferred ratio is from about 2.5 to about 3.6. The amount of extender pigment in the aqueous composition is from about 15% to about 5-%, preferably from about 25% on up.

The composition may comprise a titanium coupling agent. This reduces the viscosity of the aqueous composition, particularly containing such large amounts of extender pigment. The coupling agent may be one of those such as described in U.S. Patent Nos. 4,069,192; 4,080,353; 4,087,402; 4,094,853; 4,098,758; and 4,122,062. Examples of such coupling agents include isopropyl triisostearyl titanate, titanium di-(dioctylpyrophosphate) oxyacetate, and di-(dioctylpyrophosphato) ethylene titanate. Quaternary ammonium salts of those titanate coupling agents having an acidic function are particularly useful and are preferred components of the compositions of this invention. Especially preferred are the quaternary ammonium salts of 2-dimethylamino methyl propanol with either titanium di-(dioctylpyrophosphate) oxyacetate or di-(dioctylpyrophosphato) ethylene titanate.

The amount of the coupling agent may be from about 0.25% to about 0.75% of the weight of the extender pigment. A preferred amount is from about 0.3% to about 0.5%.

Water soluble solvents such as ethylene glycol, propylene glycol, isopropanol, butyl cellusolve and the like may be added to the aqueous composition in order to improve sprayability of the composition and to regulate the drying time during film formation. The amounts used will depend on the nature and amounts of the other components and the desired drying time but such solvents usually constitute from about 4% to about 10% of the total weight of the aqueous composition. Mixtures of the solvents are especially useful for the purposes.

The viscosity of the aqueous compositions may be adjusted as desired by the addition of cellulosic thickeners such as the methylcellulose ethers, e.g. hydroxypropyl methylcellulose, and carboxymethyl cellulose. Crosslinked acrylic or methacrylic acid copolymer emulsions also function as thickeners when activated by a base such as ammonium hydroxide. From about 1.0% to about 0.5% by weight of the aqueous composition is a generally sufficient amount of thickener.

Non-ionic surfactants and/or silicones may be used in minor amounts to control foaming of the aqueous composition during its preparation.

According to a second aspect of the invention there is provided a translucent, stainable coating comprising an acrylic resin and a water-insoluble extender pigment having a mean particle size of from about 5 to about 7 µm.

According to a third aspect of the invention there is provided a method for imparting stainability to a non-absorbent substrate, said method comprising coating said substrate with an acrylic latex filled with an extender pigment having a mean particle size of from about 5 to about 7 µm and in which said latex the ratio of extender pigment to acrylic resin is from about 1.5:1 to about 3.6:1.

According to a fourth aspect of the invention there is provided a metal article having an integral, three-dimensional, simulated wood grain in its surface and a translucent, stainable coating as hereinbefore defined over said simulated wood grain.

According to a fifth aspect of the invention there is provided a steel architectural door characterized by at least one face having an embossed surface simulating a wood grain and said surface having a translucent, stainable coating as hereinbefore defined thereon.

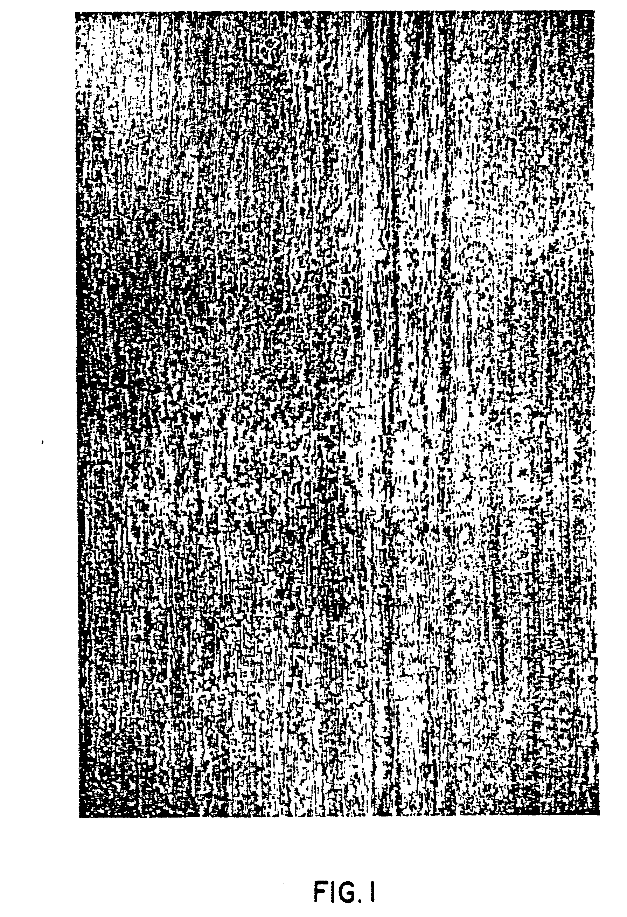

Fig. 1 is a photograph of a stained metal panel illustrative of this invention.

The metal article is preferably made of steel but other metals such as aluminium, copper, tin, and inherently colored alloys such as brass and bronze are also contemplated as the substrate in this invention. The article may be simply sheet metal or it may be a shaped article made by bending sheet metal or by molding the metal. Steel doors for houses and other buildings, i.e., architectural doors; door jambs, cabinetry and decorative trim exemplify articles for which the advantages of this invention are often sought.

The three-dimensional simulation of wood grain in the metal surface may be accomplished, for example, by embossing, coining, or etching the metal to form the grooves and the consequent thread-like ridges or tics and plateaus.

The grooves and, therefore, the tics and plateaus are of random length and width. The depth of the grooves is also not uniform. Although the tics are for the most part parallel, they and the plateaus appear to converge and diverge because of the varying lengths and widths of the grooves. Before being coated, the minimum depth of the grooves is about 2.2 times the thickness of the dry film which is to be deposited from the coating composition. A particularly pleasing and realistic effect is achieved by a preferred arrangement of the tics so that there are from about 80 to about 85 tics per square inch (about 12—13 per square centimeter). The average width of the tics in such arrangement is about 16 mils (about 0.4 mm) and the average depth of the grooves is about 5 mils (about 0.13 mm).

The bare metal surface is, of course, only suggestive of a wood grain. It is the translucent coating which enables one to complete the effect by rubbing and wiping a selected stain over the pattern. The translucent coating is substantially colorless and is capable of absorbing a decorative stain while still exposing the color and markings of the substrate. When, as is usually the case, the color of the metal is not a desirable base for the simulation of wood grain, a pigmented primer is applied to the metal before the stainable coating is applied. In some instances, however, the color of the metal, e.g., copper, bronze and the like, may serve well for special effects.

The stainable, translucent film is formed on the wood grained surface of the metal by spraying, roller-coating, or applying the aqueous composition by any other suitable method and then drying the composition. The drying temperature may range from just above the freezing point of the composition to just below its decomposition temperature but it is preferably from about room temperature to about 350°F (about 177°C). At the particularly preferred temperature of about 160°F (about 70°C), the film is sufficiently dry after about 10 to 15 minutes; the drying time will be correspondingly longer at lower temperatures and shorter at higher temperatures. The film is usually from about 0.5 to about 1 mil thick (about 0.13—0.026 mm) after drying but it may be thicker if desired.

The film accepts a decorative stain evenly much like wood does. Staining of the film may be accomplished without runs even when the surface of the substrate is vertical. Water-based, alkyd, and oil-based stains are readily absorbed.

The advantages of this invention are more pronounced when non-absorbent, i.e. water impervious, substrates such as metal or plastic are to be decorated by staining but substrates such as hardboard, particle board, plasterboard, and plywood may also be coated with the stainable film of this invention in order to prepare them for decorative staining.

The invention is illustrated more specifically by the following examples wherein all parts are by weight unless otherwise stated. The scope of the invention is not restricted to the specific details of these examples.

Example 1

A mixture of water (66 parts), an anti-foaming agent comprising a non-ionic surfactant and a silicone sold under the trademark NOPCO NXZ (0.2 part), ethylene glycol (8 parts), the quaternary ammonium salt of 2-dimethylamino methyl propanol and di(dioctylpyrophosphato) ethylene titanate (1.2 parts), zinc phosphate having an average particle size of 6 μm and sold under the product designation J0852 by Mineral Pigments Corporation (175 parts) is dispersed at high speed in a Cowles mixer for 10 minutes. Then 120 parts of an acrylic latex having a solids content of about 43% by weight, a pH of 9.4 to 10, a viscosity at 25°C of from 500 to 2000 cps (50—200 Ns m⁻²) and wherein the particle size of the all-acrylic resin is less than 0.1 μm is added along with 15 parts of isopropanol and 2 parts of a crosslinked, acidic acrylic emulsion copolymer as a thickening agent. Ammonium hydroxide (3 parts) is added to activate the thickening agent. The mixture is thoroughly blended at room temperature. The acrylic latex is sold under the trademark Rhoplex MV-23 by Rohm & Haas.

A stainable film having a porous surface resulted when the composition thus prepared was applied to a substrate and dried.

Example 2

The general procedure of Example 1 is repeated except that the acrylic latex used is an aqueous emulsion of an acrylic/styrene copolymer sold by Polyvinyl Chemical Industries under the trademark Neocryl A-623 and 10 parts of butyl cellosolve are used in addition to the ethylene glycol. The acrylic latex has a solids content of 35% by weight, a pH of 7.5, and a Brookfield viscosity at 25°C of 320 cps (32 Ns m⁻²).

This composition also provided a stainable, porous film when applied to a substrate and dried.

In contrast to the results of Examples 1 and 2, compositions prepared by the general procedure of Example 2 but substituting an equal weight of a finely divided silica (Imsil A-10, sold by Illinois Mineral Co.), or terra alba (finely divided gypsum), or a finely divided clay for the zinc phosphate give films having a sealed surface that do not accept a decorative stain.

Example 3

A mixture of 150 parts of water, 18 parts of ethylene glycol, 1.7 parts of the titanate coupling agent of Examples 1 and 2, 22 parts of butyl cellosolve and 350 parts of calcium carbonate having a mean particle size of 5.5 μm (sold under the trademark Snowflake White by Thompson, Weinman and Company) is ground at high speed in a Cowles mixer. Then, 115 parts of water; 0.5 part of an anti-foaming agent; 120 parts of an acrylic latex comprising a low molecular weight terpolymer of a lower alkyl acrylate, acrylonitrile and styrene and having a solids content of about 41% by weight, a Brookfield viscosity of from 500 to 2000 cps (50—200 Ns m⁻²) and a pH of 7.5; 120 parts of the acrylic latex of Example 1, 2 parts of a cellulosic thickener, and 8 parts of propylene glycol are added and the mixture is thoroughly blended at room temperature.

The composition thus prepared is sprayed onto several metal panels having a primer coat in place. A film having a thickness of 1 mil (about 25 μm) is formed after drying at 160°F (about 70°C) for 12 minutes with 10 minutes of flash off time.

A commercial stain is then spread on each panel and wiped in the conventional manner. The stains used are Formby's gelled stain, Cuprinol stain and wood preservative, Pratt & Lambert Penetrating Rustic Stain, Olympic (linseed oil base), Enterprise 2-in-1, Carver Tripps, and Minwax stain. Excellent stain reception is achieved in each case. The impact strength and adhesion of the film is excellent. (The names of the stains are trademarks.)

Example 4

The general procedure of Example 3 is repeated except that zinc phosphate having an average particle size of 6 μm is used in place of the calcium carbonate.

The film deposited on metal panels by the aqueous composition thus prepared also showed excellent stainability, impact strength and adhesion.

In contrast to the results of Examples 3 and 4, a film deposited from a composition prepared by the general procedure of Example 4 except for the replacement of 300 parts of the zinc phosphate by a calcium carbonate having a mean particle size of 2.5 μm showed poor stain reception.

### Example 5

Steel sheet is embossed to achieve a pattern of generally parallel lines or tics of random length to simulate the pattern of a wood grain. The wood grain effect is obtained by an arrangement of individual tics spaced apart differentially so that there are about 80 to 85 tics per square inch (about 12—13 per sq. cm). The average width of a tic is about 16 mils (0.4 mm) and the average depth of the grooves between the tics is about 5 mils (0.13 mm).

A residential steel door is fabricated from the embossed sheet material and the surface intended to be the exterior face is primed with a pigmented base coat having a beige color.

An acrylic latex coating composition is prepared by mixing 12,980 parts of water, 116.2 parts of the quaternary ammonium salt of 2-dimethyl-aminomethyl propanol and di(dioctylpyrophosphato) ethylene titanate, and 23,925 parts of calcium carbonate having a mean particle size of 5.5 μm for 10 minutes in a high speed mixer. Then are added 19,140 parts of an acrylic/styrene copolymer latex sold by Polyvinyl Chemical Industries under the trademark Neocryl A-623 and which has a resin content of about 35% and a Brookfield viscosity at 25°C of 320 cps (32 Ns m$^{-2}$). An anti-foaming agent (68.3 parts) comprising a non-ionic surfactant and a silicone (sold under the trademark Nopco NXZ), 136.5 parts of a non-ionic surfactant (Tamol 165 (trademark)), 1503 parts of butyl cellosolve, 68.3 parts of concentrated ammonium hydroxice (28% NH$_3$), 34.1 parts of 2-amino-2-methyl-1-propanol, 136.1 parts of a cellulosic thickener, 1777 parts of ethylene glycol, 15 parts of a bactericide, and an additional 8203 parts of water are added and the mixture is thoroughly blended at room temperature.

The resulting aqueous coating composition is sprayed onto the embossed face of the steel door and dried at 160°F (about 70°C) to a translucent, colorless film.

The thus coated face of the door is then stained with a semi-transparent oil-based stain (Olympic) by the conventional spreading and wiping technique. An excellent wood-like appearance is achieved upon drying of the stain.

In contrast to the results in Example 5, the presence of a pigment at a low level of concentration in an aqueous coating composition otherwise corresponding to that of Example 5 caused a pronounced mottled effect on sheet steel having the simulated wood grain embossed thereon. Use of a pigment at a concentration high enough to obscure the mottling resulted in a coating which would not absorb a stain satisfactorily.

A clear protective top coat may be applied over the stain. The top coating composition may be water-based or oil-based.

### Claims

1. An aqueous composition for forming a translucent, stain absorbent film, said composition comprising an acrylic latex, and a water-insoluble extender pigment having a mean particle size of from about 5 to about 7 μm.

2. The composition of claim 1 wherein the weight percent of said pigment is from about 15% to about 50%.

3. The composition of claim 1 wherein the weight percent of the acrylic resin is from about 10% to about 15% of the total weight.

4. The composition of claim 1 wherein the weight ratio of said pigment to the acrylic resin is from about 1.5:1 to about 3.6:1.

5. The composition of claim 1 further comprising a titanate coupling agent.

6. The composition of claim 5 wherein the amount of coupling agent is from about 0.25% to about 0.75% of the weight of the extender pigment.

7. The composition of claim 1 wherein the mean particle size is from about 5 to about 6 μm.

8. The composition of claim 1 wherein the extender pigment is at least one of the class consisting of calcium carbonate and zinc phosphate.

9. The composition of claim 1 wherein the ratio of extender pigment to acrylic resin is from about 2.5:1 to about 3.6:1.

10. The composition of claim 5 wherein the titanate coupling agent is a quaternary ammonium salt.

11. A translucent, stainable coating comprising an acrylic resin and a water-insoluble extender pigment having a mean particle size of from about 5 to about 7 μm.

12. The coating of claim 11 wherein the weight ratio of extender pigment to acrylic resin is from about 1.5:1 to about 3.6:1.

13. The coating of claim 11 wherein the extender pigment is at least one of the class consisting of calcium carbonate and zinc phosphate.

14. The coating of claim 13 wherein the mean particle size of the extender pigment is from about 5 to about 6 μm.

15. A method for imparting stainability to a non-absorbent substrate, said method comprising coating said substrate with an acrylic latex filled with an extender pigment having a mean particle size of from about 5 to about 7 μm and in which said latex the ratio of extender pigment to acrylic resin is from about 1.5:1 to about 3.6:1.

16. The method of claim 15 wherein the extender pigment is at least one of the class consisting of calcium carbonate and zinc phosphate.

17. A metal article having an integral, three-dimensional, simulated wood grain in its surface and a translucent, stainable coating according to claim 11 over said simulated wood grain.

18. The metal article of claim 17 characterized further in that said translucent coating has an absorbed stain therein.

19. The metal article of claim 17 wherein the coating comprises a filler having an average

9      **0 083 963**      10

particle size of from about 5 to about 7 µm.

20. The metal article of claim 17 wherein the coating is a film of a filled acrylic resin wherein the filler/resin ratio is from about 1.5:1 to about 3.6:1 by weight.

21. The metal article of claim 19 wherein the filler is zinc phosphate.

22. The metal article of claim 19 wherein the filler is calcium carbonate.

23. The metal article of claim 20 wherein the acrylic resin is a styrene/acrylic copolymer.

24. The metal article of claim 17 having a pigmented primer coat under said translucent coating.

25. A steel architectural door characterized by at least one face having an embossed surface simulating a wood grain and said surface having a translucent, stainable coating according to claim 11 thereon.

## Patentansprüche

1. Wäßrige Zusammensetzung zur Bildung eines durchscheinenden, fleckenabsorbierenden Films, wobei die Zusammensetzung einen Akryl-Latex und ein wasserunlösliches Verschnittpigment mit einer mittleren Teilchengröße von etwa 5 bis etwa 7 µm enthält.

2. Zusammensetzung nach Anspruch 1, worin der Gehalt an Pigment etwa 15 bis etwa 50 Gew.-% beträgt.

3. Zusammensetzung nach Anspruch 1, worin der Gehalt an Akrylharz etwa 10% bis etwa 15% des Gesamtgewichts beträgt.

4. Zusammensetzung nach Anspruch 1, worin das Gewichtsverhältnis des Pigments zum Akrylharz etwa 1,5:1 bis etwa 3,6:1 beträgt.

5. Zusammensetzung nach Anspruch 1, welches ferner ein Titanat-Haftmittel enthält.

6. Zusammensetzung nach Anspruch 5, worin die Menge des Haftmittels etwa 0,25% bis etwa 0,75% des Gewichts des Verschnittpigments beträgt.

7. Zusammensetzung nach Anspruch 1, worin die mittlere Teilchengröße zwischen etwa 5 und etwa 6 µm beträgt.

8. Zusammensetzung nach Anspruch 1, worin das Verschnittpigment wenigstens eines aus der Gruppe ist, die aus Kalziumkarbonat und Zinkphosphat besteht.

9. Zusammensetzung nach Anspruch 1, worin das Verhältnis des Verschnittpigments zu Akrylharz etwa 2,5:1 bis etwa 3,6:1 beträgt.

10. Zusammensetzung nach Anspruch 5, worin das Titanat-Haftmittel ein quaternäres Ammoniumsalz ist.

11. Durchscheinender, verfleckbarer Überzug, bestehend aus Akrylharz und einem wasserunlöslichen Verschnittpigment mit einer mittleren Teilchengröße von etwa 5 bis etwa 7 µm.

12. Überzug nach Anspruch 11, worin das Gewichtsverhältnis von Verschnittpigment zu Akrylharz etwa 1,5:1 bis etwa 3,6:1 beträgt.

13. Überzug nach Anspruch 11, worin das Verschnittpigment wenigstens eines aus der Gruppe ist, die aus Kalziumkarbonat und Zinkphosphat besteht.

14. Überzug nach Anspruch 13, worin die mittlere Teilchengröße des Verschnittpigments etwa 5 bis etwa 6 µm beträgt.

15. Verfahren, um eine nichtabsorbierende Unterlage verfleckbar zu machen, wobei die Unterlage mit einem Akryl-Latex beschichtet wird, der mit einem Verschnittpigment mit einer mittleren Teilchengröße von 5 bis etwa 7 µm gefüllt ist, wobei in dem Latex das Verhältnis von Verschnittpigment zu Akrylharz etwa 1,5:1 bis etwa 3,6:1 beträgt.

16. Verfahren nach Anspruch 15, worin das Verschnittpigment wenigstens eines aus der Gruppe ist, die aus Kalziumkarbonat und Zinkphosphat besteht.

17. Metallgegenstand mit einer angeformten dreidimensionalen vorgetäuschten Holzkörnung in seiner Oberfläche und einem durchscheinenden befleckbaren Überzug nach Anspruch 11 über der vorgetäuschten Holzkörnung.

18. Metallgegenstand nach Anspruch 17, dadurch gekennzeichnet, daß der durchscheinende Überzug eine absorbierte Befleckung enthält.

19. Metallgegenstand nach Anspruch 17, worin der Überzug einen Füllstoff mit einer mittleren Teilchengröße von etwa 5 bis etwa 7 µm enthält.

20. Metallgegenstand nach Anspruch 17, worin der Überzug ein Film aus einem gefüllten Akrylharz ist, wobei das Füllstoff/Harz-Verhältnis von etwa 1,5:1 bis etwa 3,6:1 beträgt, bezogen auf das Gewicht.

21. Metallgegenstand nach Anspruch 19, worin der Füllstoff Zinkphosphat ist.

22. Metallgegenstand nach Anspruch 19, worin der Füllstoff Kalziumkarbonat ist.

23. Metallgegenstand nach Anspruch 20, worin das Akrylharz ein Styrol/Akryl-Copolymer ist.

24. Metallgegenstand nach Anspruch 17, der eine pigmentierte Grundierungsschicht unter dem durchscheinenden Überzug aufweist.

25. Stählerne architektonische Türe, gekennzeichnet durch mindestens eine Seitenfläche mit einer geprägten Oberfläche, die eine Holzkörnung vortäuscht, wobei die Oberfläche einen durchscheinenden, befleckbaren Überzug nach Anspruch 11 trägt.

## Revendications

1. Composition aqueuse pour la réalisation d'une pellicule translucide pouvant être colorée, comprenant un latex acrylique et un pigment de charge non soluble dans l'eau pourvu d'une dimension moyenne de particule comprise entre environ 5 à 7 µm.

2. Composition suivant la revendication 1, caractérisée en ce que le pourcentage en poids dudit pigment est compris entre environ 15 à 50 %.

3. Composition suivant la revendication 1, caractérisée en ce que le pourcentage en poids de la résine acrylique est compris entre environ 10 et 15 % du poids total.

4. Composition suivant la revendication 1, caractérisée en ce que le rapport en poids entre le ledit pigment et la résine acrylique est d'environ 1.5:1 et 3.6:1.

5. Composition suivant la revendication 1, caractérisée en ce qu'elle comprend en outre un titanate comme agent de liaison.

6. Composition suivant la revendication 5, caractérisée en ce que la quantité d'agent de liaison est comprise entre environ 0.25 % et 0.75 % du poids du pigment de charge.

7. Composition suivant la revendication 1, caractérisée en ce que la dimension moyenne de particule est comprise entre environ 5 et 6 μm.

8. Composition suivant la revendication 1, caractérisée en ce que le pigment de charge fait au moins partie de la catégorie comprenant le carbonate de calcium et le phosphate de zinc.

9. Composition suivant la revendication 1, caractérisée en ce que le rapport entre le pigment de charge et la résine acrylique est compris entre environ 2.5:1 et 3.6:1.

10. Composition suivant la revendication 5, caractérisée en ce que le titanate en tant qu'agent de liaison est un sel d'amoniaque quaternaire.

11. Revêtement translucide pouvant être coloré, comprenant une résine acrylique et un pigment de charge insoluble dans l'eau, présentant une dimension moyenne de particule comprise entre environ 5 et 7 μm.

12. Revêtement suivant la revendication 11, caractérisé en ce que le rapport en poids entre le pigment de charge et la résine acrylique est compris entre environ 1.5:1 et 3.6:1.

13. Revêtement suivant la revendication 11, caractérisé en ce que le pigment de charge fait au moins partie de la catégorie comprenant la carbonate de calcium et le phosphate de zinc.

14. Revêtement suivant la revendication 13, caractérisé en ce que la dimension moyenne de particule du pigment de charge est comprise entre environ 5 à 6 μm.

15. Procédé pour permettre à un support non absorbant d'être coloré, caractérisé en ce que le revêtement dudit substrat s'effectue au moyen d'un latex acrylique chargé d'un pigment de charge présentant une dimension moyenne de particule comprise entre environ 5 et 7 μm, et en ce que dans ledit latex, le rapport entre le pigment de charge et la résine acrylique est compris entre environ 1.5:1 et 3.6:1.

16. Procédé suivant la revendication 15, caractérisé en ce que le pigment de charge fait au moins partie de la catégorie comprenant le carbonate de calcium et le phosphate de zinc.

17. Objet métallique présentant à sa surface un grain de bois simulé à trois dimensions et faisant partie intégrante de cette dernière, et un revêtement translucide pouvant être coloré, réalisé conformément à la revendication 11 et situé sur ledit grain de bois simulé.

18. Objet métallique suivant la revendication 17, caractérisé en ce que ledit revêtement translucide comprend en outre une couleur absorbée.

19. Objet métallique suivant la revendication 17, caractérisé en ce que le revêtement comprend une charge présentant une dimension moyenne de particule comprise entre environ 5 et 7 μm.

20. Objet métallique suivant la revendication 17, caractérisé en ce que le revêtement est une pellicule de résine acrylique chargée et en ce que le rapport entre la charge et la résine est compris entre environ 1.5:1 et 3.6:1 en poids.

21. Objet métallique suivant la revendication 19, caractérisé en ce que la charge est du phosphate de zinc.

22. Objet métallique suivant la revendication 19, caractérisé en ce que la charge est du carbonate de calcium.

23. Objet métallique suivant la revendication 20, caractérisé en ce que la résine acrylique est un copolymère styrène/acrylique.

24. Objet métallique suivant la revendication 17, caractérisé en ce qu'il présente un premier enduit pigmenté sous ledit revêtement translucide.

25. Porte en acier caractérisé en ce qu'au moins une de ses faces présente une surface gravée en relief simulant le grain de bois et en ce que ladite surface est pourvue d'un revêtement translucide réalisé suivant la revendication 11, pouvant être colore.

FIG. I